# FASCICULE DE BREVET EUROPEEN

(11) **EP 3 607 279 B1**
(45) Date de publication et mention de la délivrance du brevet: **16.03.2022**
(21) Numéro de dépôt: 18718885.9
(22) Date de dépôt: 29.03.2018
(51) Int. Cl.: G01F 13/00, G01F 15/02, G01F 15/00, F17C 5/00

(54) **PROCÉDÉ POUR MESURER LA QUANTITÉ DE GAZ INTRODUITE DANS UN RÉSERVOIR ET STATION DE REMPLISSAGE**
VERFAHREN ZUR MESSUNG DER IN EINEN TANK EINGETROFFENEN GASMENGE UND TANKSTELLE
METHOD FOR MEASURING THE QUANTITY OF GAS INTRODUCED INTO A RESERVOIR AND FILLING STATION

(30) Priorité: 07.04.2017 FR 1753047
(43) Date de publication de la demande: 12.02.2020
(73) Titulaire: L'AIR LIQUIDE, Société Anonyme pour l'Etude et l'Exploitation des Procédés Georges Claude, 75007 Paris (FR)
(72) Inventeur: FRANCOIS, Thibaut, 38120 Fontanil Cornillon (FR); BUCK, Marcus, 65195 Wiesbaden (DE)
(74) Mandataire: Air Liquide
(86) Numéro de dépôt international: PCT/FR2018/050771
(87) Numéro de publication internationale: WO 2018/185403

(56) Documents cités:
- JP-A- 2007 024 152
- JP-A- 2007 024 152
- JP-A- 2014 043 882
- JP-A- 2014 043 882
- US-A1- 2009 084 194
- US-A1- 2009 084 194
- US-A1- 2009 125 153
- US-A1- 2014 196 814

## Description

L'invention concerne un procédé pour mesurer la quantité de gaz introduite dans un réservoir ainsi qu'une station de remplissage.

L'invention concerne plus particulièrement un procédé pour mesurer la quantité de gaz introduite dans un réservoir de gaz via une station de remplissage munie d'un conduite de remplissage comprenant une extrémité amont reliée à au moins une source de gaz sous pression et une extrémité aval raccordée à un réservoir à remplir, la conduite de remplissage comprenant un débitmètre et une vanne d'isolation aval disposée entre le débitmètre et l'extrémité aval de la conduite de remplissage, le procédé comprenant une étape de transfert de gaz depuis la source vers le réservoir durant laquelle la vanne d'isolation aval est ouverte, une étape d'interruption du transfert de gaz avec une fermeture de vanne aval, le procédé comprenant une étape de mesure, par le débitmètre, de la quantité de gaz transférée au cours de l'étape de transfert.

Les stations de remplissage de réservoirs de gaz sous pression, notamment les réservoirs de gaz carburant de véhicules, nécessitent de mesurer la quantité de gaz introduit dans le réservoir avec un niveau de précision relativement élevé. Ceci s'applique en particulier au remplissage de réservoirs d'hydrogène gazeux.

Cette quantité doit être mesurée en vue de sa facturation (de la même façon qu'un carburant liquide.

Dans le cas d'un gaz, par exemple l'hydrogène, de nombreux paramètres ont de l'influence sur la mesure de cette quantité (pression, température, volume, débit...).

Cette quantité dépend en particulier des conditions initiales (pression avant remplissage notamment) et finales (pression après remplissage notamment). Cette quantité est également difficile à mesurer car généralement une quantité de gaz présente dans le circuit est purgée à l'extérieur après le remplissage. Cette purge est prévue pour abaisser la pression dans le flexible de la conduite de remplissage pour permettre à l'utilisateur de déconnecter l'extrémité de la conduite de remplissage du réservoir.

Idéalement il faudrait mesurer le débit de gaz transféré au plus près du réservoir (au niveau de la buse de remplissage). Cependant, pour des raisons industrielles et techniques cette mesure de débit est en fait réalisée plus en amont. Ainsi, une partie du gaz mesuré par de débitmètre n'est pas transférée dans le réservoir et risque d'être facturée.

Pour estimer au plus juste la quantité de gaz transférée (et donc facturée) certains méthodes connues ne comptent pas le gaz qui est injecté lors de test avant le remplissage (des impulsions de gaz sont prévues pour des tests d'étanchéité et/ou pour calculer le volume du réservoir ou d'autres paramètres).

La demande de brevet japonaise n° JP2007024152 A décrit un procédé de mesure de quantité de gaz introduite dans un réservoir de gaz, via une station de remplissage, selon lequel les quantités de gaz piégées dans la portion de conduite de remplissage, située à l'aval du débitmètre, sont prises en compte uniquement en fin de remplissage.

Un but de l'invention est de proposer un procédé et/ou un dispositif permettant une amélioration de précision de la mesure de cette quantité de gaz réellement fournie au réservoir.

Un but de la présente invention est de pallier tout ou partie des inconvénients de l'art antérieur relevés ci-dessus.

A cette fin, le procédé selon l'invention est conforme à la revendication n°1 annexée au présent document.

Par ailleurs, des modes de réalisation de l'invention peuvent comporter l'une ou plusieurs des caractéristiques suivantes :
- la quantité de gaz située en aval du débitmètre dans la conduite de remplissage est calculée via une équation d'état prédéterminée appliquée au gaz, telle que l'équation des gaz parfaits ou réels, et à partir du volume connu de la conduite de remplissage en aval du débitmètre, de la pression mesurée dans la conduite de remplissage en aval du débitmètre, de la nature connue dudit gaz et notamment sa masse molaire ou de sa masse volumique , et de la température du gaz mesurée ou estimée,
- le volume de la conduite de remplissage en aval du débitmètre est la somme d'un premier volume connu de la conduite de remplissage situé entre le débitmètre et la vanne d'isolation aval et d'un second volume connu de la conduite de remplissage situé entre la vanne d'isolation aval et l'extrémité aval de la conduite de remplissage, la quantité de gaz située en aval du débitmètre dans la conduite de remplissage avant ou pendant/après l'étape de transfert étant calculée comme la somme des quantités de gaz dans respectivement les premier et second volumes, les quantités de gaz dans les premier et second volumes étant calculées V=VA+VB via une équation d'état prédéterminée telle que l'équation des gaz parfaits ou réels, appliquée respectivement au premier et au second volumes, des pressions mesurées dans la conduite de remplissage respectivement dans lesdits volumes, de la nature connue dudit gaz et notamment sa masse molaire ou de sa masse volumique, et de la température du gaz mesurée ou estimée respectivement dans lesdits volumes,
- la quantité de gaz mesurée ou calculée située en aval du débitmètre dans la conduite de remplissage avant l'étape de transfert est réalisée tandis que la vanne d'isolation aval est fermée et que le premier volume est à la pression de la source de gaz sous pression, c'est-à-dire que le premier volume est en communication fluidique avec la source (5) de gaz sous pression,
- la conduite de remplissage comprend un échangeur de chaleur de refroidissement du gaz situé entre le débitmètre et la vanne d'isolation aval, le premier volume étant constitué d'une première portion située entre le débitmètre et l'entrée de l'échangeur de chaleur et une seconde portion située entre l'échangeur de chaleur et la vanne d'isolation aval et en ce que la quantité de gaz dans le premier volume est calculé comme la somme des quantités de gaz dans lesdites portions dont les volumes sont connus et dans lesquelles les pressions ou températures respectives du gaz sont mesurées ou estimées de façon distincte,
- la quantité de gaz située en aval du débitmètre dans la conduite de remplissage avant l'étape de transfert est mesurée ou calculée tandis que la vanne d'isolation aval est fermée et tandis que le second volume est la pression du réservoir à remplir, c'est-à-dire que le second volume est en communication fluidique avec le réservoir,
- la conduite de remplissage comprend, en aval de la vanne d'isolation aval, une vanne de purge commandée configurée pour permettre la purge de la conduite de remplissage et en ce que les quantités de gaz mesurées ou calculées en aval du débitmètre dans la conduite de remplissage avant et après l'étape de transfert sont déterminées tandis que la vanne de purge est fermée et avant une éventuelle étape de purge consistant ouvrir la vanne de purge à la suite de l'étape de transfert,
- la pression mesurée dans la conduite de remplissage en aval du débitmètre est réalisée lorsque la vanne de purge est close,
- l'étape de génération d'un signal de quantité de gaz transféré corrigée est réalisée pendant l'étape de transfert notamment en temps réel ou de façon régulièrement répartie temporellement pendant l'étape de transfert et/ou en fin ou après la fin de l'étape de transfert,
- le débitmètre est du type générant des signaux électriques sous forme d'impulsions successives correspondant chacune à une quantité élémentaire de gaz mesurée, la génération d'un signal de quantité de gaz transféré corrigée étant obtenue par une étape de modification d'au moins l'un parmi : la valeur de la quantité élémentaire de gaz correspondant à une impulsion générée par le débitmètre et/ou le nombre des impulsions générées par le débitmètre et/ou la fréquence d'émission des impulsions générées par le débitmètre et/ou le nombre des impulsions comptabilisées parmi les impulsions générées par le débitmètre,
- la station de remplissage comprend un dispositif électronique de traitement et de stockage de données, comprenant notamment un microprocesseur et/ou un ordinateur, ledit dispositif électronique étant configuré pour recevoir un signal représentatif de la quantité de gaz transféré mesurée par le débitmètre au cours de l'étape de transfert et pour calculer et/ou recevoir et/ou transmettre et/ou afficher le signal de quantité de gaz transféré corrigée,
- le signal de quantité de gaz transféré corrigée est utilisé dans une étape de calcul d'une facturation de la quantité de gaz introduite dans le réservoir,
- la génération d'un signal de quantité de gaz transférée corrigée est obtenue en soustrayant, ou en ajoutant une quantité déterminée d'impulsions aux impulsions générées par le débitmètre,
- l'étape de modification est réalisée en modifiant (en augmentant ou en réduisant) la fréquence des impulsions générées par le débitmètre, c'est-à-dire en retirant ou en ajoutant une durée déterminée dans l'intervalle de temps entre au moins deux impulsions générées par le débitmètre
- dans le cas où la quantité de gaz transférée corrigée consiste à réduire d'une quantité déterminée corrective la quantité de gaz transféré mesurée par le débitmètre au cours de l'étape de transfert, cette réduction est réalisée en supprimant et/ou en ne comptant pas certaines impulsions déterminées parmi les impulsions générées par le débitmètre.

L'invention concerne également une station de remplissage de réservoirs de fluide sous pression, notamment pour le remplissage de réservoirs d'hydrogène sous pression, selon la revendication n° 14 en annexe du présent document.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant un exemple de structure et de fonctionnement d'une station de remplissage selon un exemple de réalisation possible de l'invention,
- la figure 2 représente une vue schématique et partielle illustrant le principe de génération d'un signal de quantité de gaz transférée corrigée.

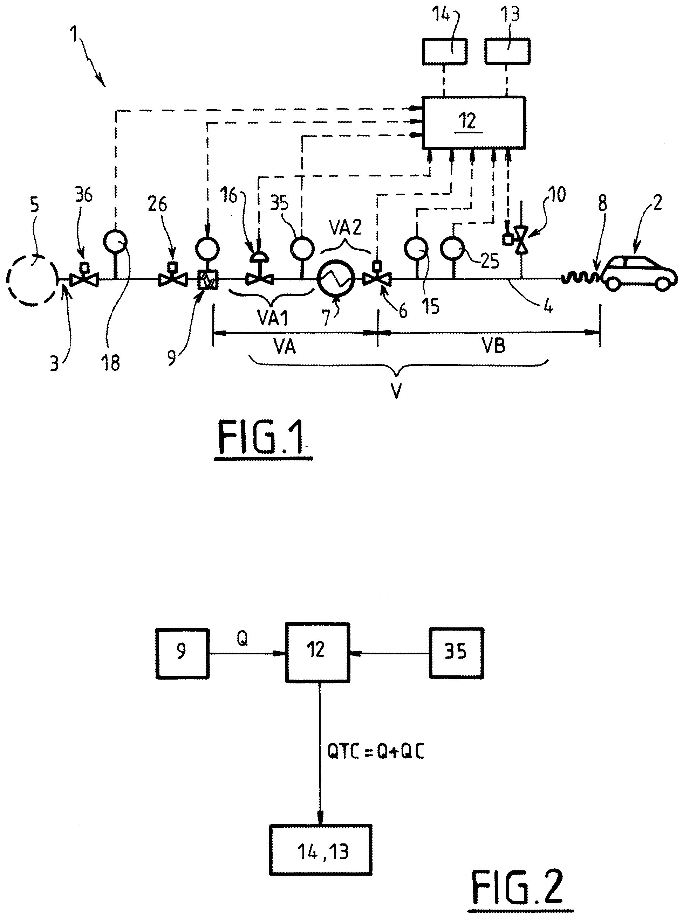

La station 1 de remplissage de réservoirs de fluide sous pression schématisée à la figure 1 comprend classiquement une conduite 4 de remplissage comprenant au moins une extrémité 3 amont reliée à au moins une source 5 de gaz sous pression et au moins une extrémité 8 aval destinée à raccordée à un réservoir 2 à remplir.

La source 5 de gaz (hydrogène notamment) peut comprendre au moins l'un parmi : un ou plusieurs réservoirs de gaz sous pression, notamment plusieurs réservoirs raccordés en parallèle pour un remplissage en cascade, un compresseur, une source de gaz liquéfié et un vaporiseur, et/ou tout autre source de gaz sous pression appropriée.

L'extrémité aval 8 comprend par exemple au moins un tuyau flexible dont l'extrémité terminale comprend un raccord, de préférence un raccord rapide, permettant sa liaison étanche avec l'entrée d'un réservoir 2 ou d'un circuit de remplissage d'un réservoir 2 (notamment de véhicule).

La conduite 4 de remplissage comprenant un débitmètre 9 et au moins une vanne 6 d'isolation aval disposée entre le débitmètre 9 et l'extrémité aval 8 de la conduite 4 de remplissage. La vanne 6 d'isolation est de préférence une vanne 6 pilotée pour permettre une étape de transfert de gaz depuis la source 5 vers le réservoir 2 lorsqu'elle est ouverte.

Le débitmètre 9, de préférence du type à effet Coriolis est configuré pour mesurer la quantité de gaz transférée et générer un signal (électrique de préférence) correspondant.

La station 1 comprend un dispositif 12 électronique de traitement et de stockage de données, comprenant par exemple un microprocesseur et/ou un ordinateur. Ce dispositif 12 électronique est configuré pour recevoir le signal du débitmètre 9 et pour générer un signal de quantité de gaz transféré corrigée obtenu en réduisant ou en augmentant d'une quantité déterminée corrective la quantité de gaz transféré mesurée par le débitmètre 9 au cours du transfert.

De préférence, le dispositif 12 électronique peut être configuré pour commander tout ou partie des vannes 6, 10 ou organes de la station et/ou pour recevoir tout ou partie des mesures de pression et/ou de température réalisé(es) par un ou des capteurs 15, 35, 25 dans le circuit 4 de remplissage (en amont et/ou en aval de la vanne 6 d'isolation aval. En particulier, préférence le dispositif 12 électronique peut être configuré pour commander le transfert de gaz vers le réservoir 2 (contrôle du débit et/ou des sources...) selon un débit prédéterminé (rampe de pression fixe et/ou variable). En particulier, la station 1 peut comporter une vanne 36 amont (pilotée de préférence) située en aval de la ou des sources 5.

De même la station 1 peut comporter une seconde vanne 26 située entre la vanne 36 amont et le débitmètre 9.

De plus, le dispositif 12 électronique peut comprendre ou être associé à une interface homme machine comprenant par exemple un afficheur 13 et/ou un terminal 14 de paiement et/ou un organe de saisie et/ou d'identification. Le dispositif 12 électronique peut comprendre des organes de communication sans fil pour transmettre ou recevoir ces données et/ou d'autres données. En particulier, tout ou partie des moyens de calcul et/ou de stockage de données et/ou d'affichage et/ou de facturation peuvent être déportés de la station ou dupliqués à distance (via le réseau internet ou un réseau local et utilisant par exemple des applications sur téléphone sans fil).

Comme illustré, la conduite 4 de remplissage comprend également de préférence en outre une vanne 10 de purge située en aval de la vanne 6 d'isolation aval.

La vanne 10 de purge est de préférence commandé pour évacuer à l'extérieur de la conduite 4 de remplissage au moins une partie du gaz sous pression emprisonné dans la partie aval de conduite 4 de remplissage après une étape de transfert (à la fin d'un remplissage). Le gaz purgé est évacué à l'atmosphère ou dans une zone de récupération.

La station 1 est configurée (par exemple programmée ou pilotée) pour réaliser des remplissages comprenant un étape de transfert de gaz depuis la source 5 vers le réservoir 2 durant laquelle la vanne 6 d'isolation aval est ouverte, une étape d'interruption du transfert de gaz avec une fermeture de vanne 6 aval.

La station est configurée pour mesurer, via le débitmètre 9, la quantité de gaz transférée au cours de l'étape de transfert.

Selon une particularité avantageuse, la station 1 génère un signal de quantité de gaz transféré corrigée QTC (cf. figure 2), cette quantité de gaz transféré QTC corrigée étant obtenue en ajoutant une quantité corrective QC déterminée, positive ou négative, à la quantité Q de gaz transféré mesurée par le débitmètre 9 au cours de l'étape de transfert (cf. figure 2).

En réduisant ou en augmentant d'une quantité corrective QC la quantité de gaz transféré mesurée par le débitmètre 9 Q au cours de l'étape de transfert il est ainsi possible d'afficher et/ou de facturer à l'utilisateur une quantité de gaz QTC qui est plus proche ou égale à la quantité de gaz réellement transférée dans le réservoir 2.

De façon avantageuse, en mesurant ou calculant la quantité de gaz présent dans la conduite 4 de remplissage en aval du débitmètre 9 avant l'étape de transfert et après ou pendant l'étape de transfert et en faisant la différence entre ces valeurs il est possible d'estimer au plus juste la quantité de gaz réellement transférée dans le réservoir.

La quantité corrective déterminée est la différence entre d'une part la quantité de gaz mesurée ou calculée située en aval du débitmètre 9 dans la conduite 4 de remplissage avant l'étape de transfert et, d'autre part, la quantité de gaz mesurée ou calculée située dans la conduite 4 de remplissage en aval du débitmètre 9 pendant et/ou à la fin de l'étape de transfert.

En effet, avant un transfert de gaz vers le réservoir 2, il peut y avoir déjà une quantité de gaz non négligeable emprisonnée sous pression entre le débitmètre 9 et la vanne 6 d'isolation aval. Avant remplissage, en aval de la vanne 6 d'isolation aval, la conduite 4 de remplissage a en principe été purgée (pour permettre la déconnexion du réservoir précédent et permettre la connexion au réservoir 2 à remplir). Cette quantité de gaz initiale en aval de la vanne 6 d'isolation peut être une quantité déterminée fixe ou mesurée ou estimée et/ou éventuellement négligeable.

Pendant ou à la fin de l'étape de remplissage, une quantité de gaz est emprisonnée entre le débitmètre 9 et la vanne 6 d'isolation aval ainsi qu'en aval de cette vanne 6 d'isolation aval.

La quantité corrective est la différence entre la quantité de gaz qui « était là avant l'étape de transfert » et la quantité de gaz « qui est là » pendant ou à la fin de l'étape de transfert.

Ceci permet en particulier de prendre en compte des éventuels jets de gaz utilisés lors d'une phase préliminaire au remplissage effectif (pour des tests de fuite et/ou pour d'autres calculs comme le calcul du volume du réservoir 2 à remplir).

La quantité de gaz située en aval du débitmètre 9 dans la conduite 4 de remplissage peut être calculée via une équation d'état prédéterminée appliquée au gaz, telle que l'équation des gaz parfaits ou réels, et à partir du volume connu V de la conduite 4 de remplissage en aval du débitmètre 9, de la pression mesurée 15 dans la conduite 4 de remplissage en aval du débitmètre 9, de la nature connue dudit gaz (hydrogène par exemple) et notamment sa masse molaire ou de sa masse volumique, et de la température 25 du gaz mesurée ou estimée.

En effet, la quantité (masse par exemple) de gaz dépend du volume et de sa masse volumique. La masse volumique dépend de sa pression et de sa température. Les variations de température ont peu d'influence sur les quantités calculées. Les inventeurs ont déterminé que la pression est le paramètre le plus significatif pour déterminer la masse volumique du gaz.

Comme illustré, ce volume V de la conduite 4 de remplissage en aval du débitmètre 9 peut être la somme d'un premier volume VA connu situé entre le débitmètre 9 et la vanne 6 d'isolation aval et d'un second volume VB connu situé entre la vanne 6 d'isolation aval et l'extrémité aval 8 de la conduite 4 de remplissage.

La quantité de gaz (masse par exemple) située en aval du débitmètre 9 dans la conduite 4 de remplissage avant (ou pendant et/ou après) l'étape de transfert peut être calculée comme la somme des quantités de gaz dans respectivement les premier VA et second VB volumes. Les quantités de gaz dans les premier VA et second VB volumes peuvent être calculées (V=VA+VB) via une équation d'état telle que l'équation des gaz parfaits ou réels, appliquée respectivement au premier VA et au second VB volumes, des pressions mesurées 35, 15 dans la conduite 4 de remplissage respectivement dans lesdits volumes VA, VB, de la nature connue dudit gaz et notamment sa masse molaire, et de la température du gaz mesurée 25 ou estimée respectivement dans lesdits volumes VA, VB.

Comme illustré, la conduite 4 de remplissage peut comprendre un échangeur 7 de chaleur de refroidissement du gaz situé entre le débitmètre 9 et la vanne 6 d'isolation aval.

Ainsi, le premier volume VA peut être constitué d'une première portion VA1 située entre le débitmètre 9 et l'entrée de l'échangeur 7 de chaleur et une seconde portion située entre l'échangeur 7 de chaleur et la vanne 6 d'isolation aval.

Ainsi, la quantité de gaz dans le premier VA volume peut être calculée comme la somme des quantités de gaz dans lesdites portions VA1, VA2 dont les volumes sont connus et dans lesquelles les pressions ou températures respectives du gaz sont mesurées 15, 25, 35 ou estimées ou prédéterminées de façon distincte.

La station 1 peut à cet effet comporter tout ou partie de :
- un capteur 18 de pression situé entre la vanne 36 amont et la seconde vanne 26,
- un capteur 35 de pression (et/ou de température) situé entre le débitmètre 9 et la vanne 6 d'isolation aval,
- un capteur 15 de pression situé en aval de la vanne 6 d'isolation aval,
- un capteur 25 de température situé en aval de la vanne 6 d'isolation aval.

Par exemple, le gaz dans la première portion VA1 peut être considéré à la température ambiante ou une température prédéterminée fixe (par exemple 15°C).

Par exemple, le gaz dans la seconde portion VA2 peut être considéré à la température mesurée dans l'échangeur 7 ou une température prédéterminée fixe, par exemple la température imposée au gaz par l'échangeur (par exemple -38°C).

La quantité de gaz dans chaque volume VA1, VA2 peut être obtenue dans chaque cas en multipliant la masse volumique (c'est-à-dire masse volumique) par le volume. La masse volumique peut être donnée par des tables connues pour le gaz selon la température ou la pression du gaz. Par exemple, la variation de masse volumique en fonction de la variation de température peut être exprimée par un polynôme du troisième degré dans lequel la variable est la température, par exemple : masse volumique (à la température x) = a x³ + b x² + c x + d
avec x= la température et a= 1.45796488E-08, b= 4.67566286E-05, c=8.27775648E-02 et d= 1.26788978E-01 pour une température de gaz de 15°C.

Pour une température de gaz de -38°C les coefficients peuvent être a= 0.00000002, b= 0.00006715, c= 0.10133084 et d= 0.20007587.

Bien entendu tout autre mode de détermination de la masse volumique peut être envisagé (par exemple, tables préenregistrées dans le dispositif 12 en fonction d el température, valeur fixe pour une température prédéterminée...).

A noter que, les calculs des quantités de gaz sont réalisés de préférence pour une température de référence (par exemple égale à 15°C dans la première portion du premier volume). Si une augmentation de température se produit (par exemple 40°C au lieu de 15°C) cela a peu d'influence sur les résultats (mais ceci pourrait être compensé par calcul si besoin d'une grande précision).

En effet, les inventeurs ont déterminés que cela modifie de quelques pourcent seulement (moins de trois pourcent) la quantité de gaz calculée dans la première portion du premier volume V1. Ainsi, la mesure ou la prise en compte d'une température ambiante précise a peu d'influence sur la précision de la méthode.

De même, en cas de refroidissement insuffisant de l'échangeur 7, même si la température du gaz refroidi dans la seconde portion du premier volume n'est pas celle prise en compte (par exemple -33°C au lieu de -38°C) cela a également peu sur la précision les résultats.

De même, si les pressions mesurées dans les volumes VA1, VA2, VB sont erronées (mesure imprécise de 20bar par exemple) cela a également peut d'incidence et peut être négligé (mais pourrait également être compensé par calcul en cas de besoin de plus de précision).

Ceci indique que le calcul de la quantité corrective est assez robuste aux fluctuations éventuelles des conditions opératoires ou conditions de mesure.

Dans le cas où le ou les volumes V1, V2,VB sont estimés de façon imprécise cela a un impact plus grand mais limité sur les estimations. En effet, une erreur d'environ 10% de volume a un effet inférieur à 10% sur la marge d'erreur admise.

Bien entendu, tout autre mode de calcul d'estimation ou d'approximation de la masse volumique approprié pourra être utilisé.

Exemple 1 : Soit un premier volume VA de 400cm³ et d'un second volume VB de 180cm³. Si la pression initiale (par exemple mesurée avant l'étape de transfert) est de 850bar dans le premier volume VA et de 4bar dans le second volume VB, les quantités respectives de gaz d'hydrogène dans ces volumes sont 20,5g et 0,1g. La quantité de gaz initiale totale en aval du débitmètre 9 est donc 20,6g.

Ces quantités ont été calculées pour une température de gaz considérée prédéfinie ou mesurée ou estimée (par exemple 15°C pour VA1= à 66cm³ environ, -38°C pour VA2=336cm³ environ et V=177cm³ environ).

Au cours (ou à la fin) de l'étape de remplissage la pression peut atteindre 750bar dans le premier volume VA et de 750bar dans le second volume VB (la vanne d'isolation aval a été ouverte pour équilibrer la pression entre l'amont et l'aval de la conduite 4 de remplissage). Dans ce cas, les quantités de gaz d'hydrogène dans ces deux volumes VA, VB sont alors respectivement de 19g et 8,5g. La quantité de gaz initiale totale en aval du débitmètre 9 est donc 27,5g. Ainsi si le remplissage s'arrête là, la quantité corrective est -6,9g c'est-à-dire qu'il faut retirer 6,9g de gaz à la quantité mesurée par le débitmètre 9 au cours du transfert par rapport à l'état initial.

Ainsi, la quantité corrective (valeur absolue et son signe : positif ou négatif) dépend des conditions de pression avant et au cours (après) le transfert de gaz

Exemple 2 : Dans ce second exemple les volumes et quantités initiales sont identiques au premier exemple (VA=400cm³, VB= 80cm³ ; pression/quantités respectives 850bar/20,5g et 4bar/0,1g).

Au cours (ou à la fin) de l'étape de remplissage la pression peut atteindre cette fois 400bar dans le premier volume VA et 400bar dans le second volume VB.

Dans ce cas, les quantités de gaz d'hydrogène dans ces deux volumes VA, VB sont alors respectivement de 12,4g et 5,6g. La quantité de gaz de gaz finale totale en aval du débitmètre 9 est donc 18g. Ainsi si le remplissage s'arrête là, la quantité corrective est 20,6-18=2,6g c'est-à-dire qu'il faut ajouter 2,6g de gaz à la quantité mesurée par le débitmètre 9 au cours du transfert.

En effet, les conditions avant transfert de gaz permettent de calculer la quantité de gaz présent dans la portion considérée de la conduite de remplissage. Ensuite, dès lors que le transfert de gaz se produit, la pression dans la conduite 4 de remplissage va changer. La quantité de gaz qui est présente dans cette conduite 4 va donc évoluer. De même cette différence va varier (valeur positive ou nulle ou négative). Selon une particularité avantageuse, cette différence est calculée de façon continue (par exemple en temps réel). C'est-à-dire que la quantité réelle de gaz transféré dans le réservoir (quantité mesurée par le débitmètre plus la quantité corrective) est calculée en continu ou régulièrement au cours de remplissage (en vue de son affichage ou stockage dans une mémoire ou envoi à distance). Ainsi, la quantité réellement transférée dans le réservoir 2 peut être calculée en temps réel. Ainsi, si l'utilisateur termine le remplissage de façon prématurée, la quantité réellement consommée/facturée sera disponible et aura le cas échéant déjà été affichée sans nécessiter une correction a postériori.

C'est-à-dire que la correction (quantité corrective) est mise à jour au cours du remplissage et ajoutée au cours du remplissage à la valeur mesurée par le débitmètre.

De préférence, cette correction est prise en compte uniquement en cas d'une différence significative (par exemple à 0,5g de gaz près). C'est-à-dire que si la quantité corrective déterminée est inférieure à 0,5g de gaz en valeur absolue, cette quantité corrective n'est pas retenue.

De préférence également, en cas de déviation de la quantité corrective calculée, cette déviation ou incertitude bénéficie à l'utilisateur (l'utilisateur peut le cas échéant être facturé une quantité de gaz corrigée un peu moindre que celle réellement transférée au réservoir 2).

Le début d'un remplissage peut être détecté de préférence avec l'information de fermeture de la vanne 10 de purge. C'est-à-dire que, après la purge suite à un remplissage précédent, la fermeture de cette vanne 10 de purge peut constituer la ou une des conditions signalant le moment où les conditions initiales (pression..) doivent être déterminées pour calculer la quantité de gaz en aval du débitmètre 9 avant une étape de transfert.

En se référant à la figure, un exemple de processus remplissage peut comporter tout ou partie des étapes successives ci-dessous.

A un temps T0, l'utilisateur peut s'identifier auprès de l'interface 13, 14 homme-machine de la station (carte de paiement ou autre par exemple). En cas d'identification positive il est invité à raccorder l'extrémité aval 8 de la conduite 4 de remplissage au réservoir 2 à remplir.

Au temps T1, lors de ce raccordement, le dispositif 12 électronique peut échanger avec le terminal 14 de paiement et/ou de facturation. Si le remplissage est autorisé, le dispositif 12 électronique peut commander l'ouverture de la vanne 6 d'isolation amont (et éventuellement de tout ou partie des vannes 16, 26, 36 en amont) pour mettre la conduite 4 de remplissage à la pression de la source 5.

Au temps T2, après raccordement l'utilisateur (ou la station d'elle-même) peut déclencher le remplissage (pression d'un bouton par exemple). C'est à ce moment là (ou avant) que la vanne 10 de purge peut être fermée. Ceci peut déclencher le processus de calcul de la quantité corrective déterminée.

Ainsi la quantité initiale de gaz en aval du débitmètre peut être calculée à cet instant (cf. les exemples ci-dessus) et notamment dans le premier volume A.

Une vanne 16 de régulation (située en amont de la vanne 6 d'isolation aval) peut être ouverte pour des jets de gaz (« puises »). Du gaz peut alors transiter ainsi par le débitmètre 9. De préférence ce ou ces jets de gaz ne sont pas comptabilisés dans la suite dans la quantité de gaz réellement transférée au réservoir 2.

Au temps T3 la vanne 6 d'isolation aval peut être refermée. La pression mesurée 35 entre la vanne 16 de régulation et la vanne 6 d'isolation aval peut chuter pour s'égaliser avec la pression du réservoir 2. Cette baisse de pression implique une quantité corrective calculée négative (il y a en effet une baisse de pression en aval du débitmètre 9 par rapport aux conditions initiales). La quantité de gaz corrigée peut être transmise en temps réel au dispositif 14 de facturation.

Au temps T4 le remplissage proprement dit (le transfert de gaz selon une rampe déterminée par exemple) peut être activé avec le contrôle des vannes 6, 16 appropriées. La pression mesurée par le capteur 35 en aval de la vanne 6 d'isolation aval (en aval de la vanne 16 de contrôle notamment) mesure une pression qui augmente. Le débitmètre 9 mesure ce débit.

La quantité de gaz en aval du débitmètre 9 dans la conduite 4 de remplissage va donc augmenter. Cette quantité dans le volume V=VA+VB est calculée à chaque pas de pression déterminé ou à chaque pas temporel déterminé ou en continu (cf. ci-dessus). La quantité de gaz mesurée par le débitmètre 9 peut être supérieure à la quantité de gaz réellement transférée dans le réservoir 2, c'est-à-dire que la quantité corrective de gaz calculée peut être négative.

Au temps T5 lorsque l'étape de remplissage est interrompue (automatiquement ou par l'utilisateur), la vanne 6 d'isolation aval est fermée puis la vanne 10 de purge est ouverte.

Le dispositif 12 électronique a continuellement mis à jour la quantité de gaz transférée corrigée QTC (ou à la fin du transfert bien que ceci soit moins ergonomique). La quantité réellement transférée (corrigée) dans le réservoir 2 est affichée/facturée 12, 14 et peut être différente (supérieure ou inférieure) à la quantité de gaz mesurée par le débitmètre 9.

Un autre remplissage peut succéder à ce remplissage terminé.

De préférence le débitmètre 9 est du type générant des signaux électriques sous forme d'impulsions successives (« puises ») correspondant chacune à une quantité élémentaire de gaz mesurée (par exemple un gramme ou trois gramme ou « x » gramme à chaque impulsion). C'est-à-dire que, à chaque fois que le débitmètre 9 mesure le passage d'une quantité de gaz (par exemple un gramme) il émet une impulsion. Le débit mesuré Q correspond au nombre d'impulsions par unité de temps (par exemple un certain nombre de grammes de gaz par minutes).

La génération d'un signal de quantité de gaz transféré corrigée (QTC) peut être obtenue par une étape de modification d'au moins l'un parmi : la valeur de la quantité élémentaire de gaz correspondant à une impulsion générée par le débitmètre 9 et/ou le nombre des impulsions générées par le débitmètre 9 et/ou la fréquence d'émission des impulsions générées par le débitmètre 9 et/ou le nombre des impulsions comptabilisées parmi les impulsions générées par le débitmètre 9.

La génération d'un signal de quantité de gaz transféré corrigée peut notamment être obtenue en soustrayant ou en ajoutant une quantité déterminée d'impulsions aux impulsions générées par le débitmètre 9. La soustraction de pulse peut être obtenue par exemple en ne tenant pas compte (en ne comptabilisant pas) certaines impulsions.

Cet ajustement des pulses peut être réalisé en continu à chaque intervalle de temps de temps prédéfini (seconde), et/ou à chaque intervalle de pression dans le réservoir prédéfini (bar) et/ou à chaque quantité prédéfinie d'impulsions ou en temps réel.

Ainsi, la quantité corrective de gaz peut être connue à chaque niveau de pression lors du remplissage. Pour chaque gramme de gaz mesuré par le débitmètre 9 une fraction calculée peut être considérée non introduite dans le réservoir 2 et ultérieurement purgée.

Au lieu de retirer (ne pas comptabiliser)/ajouter des impulsions à celles mesurées par le débitmètre 9 il est également possible de jouer sur un autre paramètre tel que la modulation de phase ou de fréquence des impulsions. Ainsi l'intervalle de temps entre les impulsions peut servir de variable d'ajustement pour arriver à la quantité de gaz corrigée.

Ainsi, il est possible de « reconstruire/modifier » la fréquence des impulsions générée par le débitmètre 9 pour tenir compte de cette correction.

Par exemple, si cent impulsions sont générées pendant une durée D par le débitmètre 9, celles-ci sont retraitées (traitement du signal) en quatre-vingt-dix impulsions régulièrement répartie pendant la même durée D.

Le temps ajouté ou retranché entre deux impulsions peut être déterminé pour correspondre à la quantité de gaz corrigée.

La durée D de remplissage peut être définie/estimée au préalable (avant remplissage) en fonction de la pression initiale dans le réservoir 2, de la vitesse d'augmentation de pression prévue (rampe de pression prédéfinie) et de la pression finale souhaitée.

Par exemple pour un réservoir de 122litres, et une rampe de pression de 218 bar/minute, et une pression cible de 819 bar, la durée D du remplissage est de 3 minutes et 15 secondes (quantité injectée est 4,2kg et la température de remplissage est de -33°C). Ces conditions de remplissage sont définies le cas échéant par des conditions normées.

Pour simplifier le processus, tout ou partie des paramètres (durée de remplissage D, quantité de gaz transférée, température ambiante, température du gaz dans la conduite 4 de remplissage, pression avant l'étape de transfert dans la conduite 4 de remplissage, température finale dans la conduite 4 de remplissage à la fin de l'étape de transfert...) peuvent être fixées au préalable selon des condition réputées standard.

La quantité de gaz transférée corrigée serait alors calculée sur ces conditions fixes. Ceci permet notamment de limiter le nombre de paramètres à mesurer et donc le nombre d'appareils dont le fonctionnement doit être certifié.

De même, dans un autre mode de réalisation possible, la valeur de la quantité unitaire des impulsions peut servir de variable d'ajustement pour arriver à la quantité de gaz corrigée.

Par exemple, les impulsions ne sont plus générées à chaque gramme mais à chaque 1,1gramme de gaz mesuré ou 0,9gramme au d'autres valeurs pour tenir compte de la quantité de gaz corrective.

Le dispositif 12 électronique de traitement et de stockage de données peut comprendre ou être associé à un organe de comptage des impulsions et un organe de correction des impulsions comptabilisées (ce ou ces organes peuvent comprendre des cartes électroniques ou tout autre dispositif approprié).

Bien entendu le circuit 4 de remplissage peut comporter d'autre(s) éléments et notamment d'autres vanne(s) en amont ou en aval de la vanne 6 d'isolation aval et/ou un volume tampon entre le débitmètre 9 et la vanne 6 d'isolation aval ou tout autre élément approprié.

## Revendications

1. Procédé pour mesurer la quantité de gaz introduite dans un réservoir (2) de gaz via une station (1) de remplissage munie d'un conduite (4) de remplissage comprenant une extrémité (3) amont reliée à au moins une source (5) de gaz sous pression et une extrémité (8) aval raccordée à un réservoir (2) à remplir, la conduite (4) de remplissage comprenant un débitmètre (9) et une vanne (6) d'isolation aval disposée entre le débitmètre (9) et l'extrémité aval (8) de la conduite de remplissage, le procédé comprenant une étape de transfert de gaz depuis la source (5) vers le réservoir (2) durant laquelle la vanne (6) d'isolation aval est ouverte, une étape d'interruption du transfert de gaz avec une fermeture de vanne (6) aval, le procédé comprenant une étape de mesure, par le débitmètre (9), de la quantité de gaz transférée au cours de l'étape de transfert, le procédé comprenant une étape de génération d'un signal de quantité de gaz transféré corrigée, la quantité de gaz transféré corrigée étant obtenue en ajoutant une quantité corrective déterminée, positive ou négative, à la quantité de gaz transféré mesurée par le débitmètre (9) au cours de l'étape de transfert, la quantité corrective déterminée étant la différence entre d'une part la quantité de gaz mesurée ou calculée située en aval du débitmètre (9) dans la conduite (4) de remplissage avant l'étape de transfert et, d'autre part, la quantité de gaz mesurée ou calculée située dans la conduite (4) de remplissage en aval du débitmètre (9) pendant et/ou à la fin de l'étape de transfert, et **caractérisé en ce que** l'étape de génération d'un signal de quantité de gaz transféré corrigée est réalisée plusieurs fois au cours de l'étape de transfert, c'est-à-dire que la différence entre d'une part, la quantité de gaz mesurée ou calculée située en aval du débitmètre (9) dans la conduite (4) de remplissage avant l'étape de transfert et, d'autre part la quantité de gaz mesurée ou calculée située dans la conduite (4) de remplissage en aval du débitmètre (9) pendant le remplissage, est calculée plusieurs fois au cours du remplissage à des instants successifs, et **en ce que** le dernier signal de quantité de gaz transféré corrigée généré remplace le précédent signal de quantité de gaz transféré corrigée généré au cours du même remplissage.

2. Procédé selon la revendication 1, **caractérisé en ce que** la quantité de gaz située en aval du débitmètre (9) dans la conduite (4) de remplissage est calculée via une équation d'état prédéterminée appliquée au gaz, telle que l'équation des gaz parfaits ou réels, et à partir du volume connu (V) de la conduite (4) de remplissage en aval du débitmètre (9), de la pression mesurée (15) dans la conduite (4) de remplissage en aval du débitmètre (9), de la nature connue dudit gaz et notamment sa masse molaire ou de sa masse volumique, et de la température (25) du gaz mesurée ou estimée.

3. Procédé selon la revendication 2, **caractérisé en ce que** le volume (V) de la conduite (4) de remplissage en aval du débitmètre (9) est la somme d'un premier volume (VA) connu de la conduite (4) de remplissage situé entre le débitmètre (9) et la vanne (6) d'isolation aval et d'un second volume (VB) connu de la conduite (4) de remplissage situé entre la vanne (6) d'isolation aval et l'extrémité aval de la conduite (4) de remplissage, la quantité de gaz située en aval du débitmètre (9) dans la conduite (4) de remplissage avant ou pendant/après l'étape de transfert étant calculée comme la somme des quantités de gaz dans respectivement les premier (VA) et second (VB) volumes, les quantités de gaz dans les premier (VA) et second (VB) volumes étant calculées (V=VA+VB) via une équation d'état prédéterminée telle que l'équation des gaz parfaits ou réels, appliquée respectivement au premier (VA) et au second (VB) volumes, des pressions mesurées (15) dans la conduite (4) de remplissage respectivement dans lesdits volumes (VA, VB), de la nature connue dudit gaz et notamment sa masse molaire ou de sa masse volumique, et de la température du gaz mesurée (25) ou estimée respectivement dans lesdits volumes (VA, VB).

4. Procédé selon la revendication 3, **caractérisé en ce que** la quantité de gaz mesurée ou calculée située en aval du débitmètre (9) dans la conduite (4) de remplissage avant l'étape de transfert est réalisée tandis que la vanne (6) d'isolation aval est fermée et que le premier volume (VA) est à la pression de la source (5) de gaz sous pression, c'est-à-dire que le premier volume (VA) est en communication fluidique avec la source (5) de gaz sous pression.

5. Procédé selon la revendication 3 ou 4, **caractérisé en ce que** la conduite (4) de remplissage comprend un échangeur (7) de chaleur de refroidissement du gaz situé entre le débitmètre (9) et la vanne (6) d'isolation aval, le premier volume (VA) étant constitué d'une première portion (VA1) située entre le débitmètre (9) et l'entrée de l'échangeur (7) de chaleur et une seconde portion située entre l'échangeur (7) de chaleur et la vanne (6) d'isolation aval et **en ce que** la quantité de gaz dans le premier (VA) volume est calculé comme la somme des quantités de gaz dans lesdites portions (VA1, VA2) dont les volumes sont connus et dans lesquelles les pressions ou températures respectives du gaz sont mesurées (15, 25, 35) ou estimées de façon distincte.

6. Procédé selon l'une quelconque des revendications 3 à 5, **caractérisé en ce que** la quantité de gaz située en aval du débitmètre (9) dans la conduite (4) de remplissage avant l'étape de transfert est mesurée ou calculée tandis que la vanne (6) d'isolation aval est fermée et tandis que le second volume (VB) est la pression du réservoir (2) à remplir, c'est-à-dire que le second volume (VB) est en communication fluidique avec le réservoir (2).

7. Procédé selon l'une quelconque des revendications 1 à 6, **caractérisé en ce que** la conduite (4) de remplissage comprend, en aval de la vanne (6) d'isolation aval, une vanne (10) de purge commandée configurée pour permettre la purge de la conduite (4) de remplissage et **en ce que** les quantités de gaz mesurées ou calculées en aval du débitmètre (9) dans la conduite (4) de remplissage avant et après l'étape de transfert sont déterminées tandis que la vanne (10) de purge est fermée et avant une éventuelle étape de purge consistant ouvrir la vanne (10) de purge à la suite de l'étape de transfert.

8. Procédé selon la revendication 7, **caractérisé en ce que** la pression mesurée (15, 35) dans la conduite (4) de remplissage en aval du débitmètre (9) est réalisée lorsque la vanne (10) de purge est close.

9. Procédé selon l'une quelconque des revendications 1 à 8, **caractérisé en ce que** l'étape de génération d'un signal de quantité de gaz transféré corrigée est réalisée pendant l'étape de transfert notamment de façon régulière, continument ou de façon intermittente pendant l'étape de transfert et éventuellement en fin ou après la fin de l'étape de transfert.

10. Procédé selon l'une quelconque des revendications 1 à 9, **caractérisé en ce que** la valeur de quantité de gaz transféré la plus récente est prise en compte lors d'un affichage et/ou d'une facturation et/ou d'une transmission de données de quantité de gaz introduite dans le réservoir (2) au cours du remplissage, c'est-à-dire que la quantité de gaz introduite dans le réservoir (2) est mise à jour périodiquement ou en continu au cours du remplissage à partir des valeurs variables que sont la quantité de gaz transféré mesurée par le débitmètre au cours du remplissage et la quantité corrective déterminée au cours du remplissage.

11. Procédé selon l'une quelconque des revendications 1 à 10, **caractérisé en ce que** le débitmètre (9) est du type générant des signaux électriques sous forme d'impulsions successives correspondant chacune à une quantité élémentaire de gaz mesurée et **en ce que** ce que la génération d'un signal de quantité de gaz transféré corrigée est obtenu par une étape de modification d'au moins l'un parmi : la valeur de la quantité élémentaire de gaz correspondant à une impulsion générée par le débitmètre (9) et/ou le nombre des impulsions générées par le débitmètre (9) et/ou la fréquence d'émission des impulsions générées par le débitmètre (9) et/ou le nombre des impulsions comptabilisées parmi les impulsions générées par le débitmètre (9).

12. Procédé selon l'une quelconque des revendications 1 à 11, **caractérisé en ce que** la station (1) de remplissage comprend un dispositif (12) électronique de traitement et de stockage de données, comprenant notamment un microprocesseur et/ou un ordinateur, ledit dispositif (12) électronique étant configuré pour recevoir un signal représentatif de la quantité de gaz transféré mesurée par le débitmètre (9) au cours de l'étape de transfert et pour calculer et/ou recevoir et/ou transmettre et/ou afficher le signal de quantité de gaz transféré corrigée.

13. Procédé selon l'une quelconque des revendications 1 à 12, **caractérisé en ce que** le signal de quantité de gaz transféré corrigée est utilisé dans une étape de calcul d'une facturation de la quantité de gaz introduite dans le réservoir (2).

14. Station de remplissage de réservoirs de fluide sous pression, notamment pour le remplissage de réservoirs d'hydrogène sous pression, comportant une conduite (4) de remplissage comprenant une extrémité (3) amont reliée à au moins une source (5) de gaz sous pression et au moins une extrémité (8) aval destinée à raccordée à un réservoir (2) à remplir, la conduite (4) de remplissage comprenant un débitmètre (9) et au moins une vanne (6) d'isolation aval disposée entre le débitmètre et l'extrémité aval (8) de la conduite de remplissage, la au moins une vanne (6) étant pilotée pour permettre une étape de transfert de gaz depuis la source (5) vers le réservoir (2), le débitmètre (9) étant configuré pour mesurer la quantité de gaz transférée et générer un signal correspondant, la station (1) comprenant un dispositif (12) électronique de traitement et de stockage de données, comprenant notamment un microprocesseur et/ou un ordinateur le dispositif (12) électronique étant configuré recevoir le signal du débitmètre (9) et pour générer un signal de quantité de gaz transféré corrigée, la quantité de gaz transféré corrigée étant obtenue en ajoutant une quantité corrective déterminée, positive ou négative, à la quantité de gaz transféré mesurée par le débitmètre (9) au cours de l'étape de transfert, la quantité corrective déterminée étant la différence entre d'une part la quantité de gaz mesurée ou calculée située en aval du débitmètre (9) dans la conduite (4) de remplissage avant l'étape de transfert et, d'autre part, la quantité de gaz mesurée ou calculée située dans la conduite (4) de remplissage en aval du débitmètre (9) pendant et/ou à la fin de l'étape de transfert, et **caractérisée en ce que** l'étape de génération d'un signal de quantité de gaz transféré corrigée est réalisée plusieurs fois au cours de l'étape de transfert, c'est-à-dire que la différence entre d'une part, la quantité de gaz mesurée ou calculée située en aval du débitmètre (9) dans la conduite (4) de remplissage avant l'étape de transfert et, d'autre part la quantité de gaz mesurée ou calculée située dans la conduite (4) de remplissage en aval du débitmètre (9) pendant le remplissage, est calculée plusieurs fois au cours du remplissage à des instants successifs, et **en ce que** le dernier signal de quantité de gaz transféré corrigée généré remplace le précédent signal de quantité de gaz transféré corrigée généré au cours du même remplissage.

## Patentansprüche

1. Verfahren zum Messen der Gasmenge, die über eine Befüllstation (1) in einen Gastank (2) eingeleitet wird, die mit einer Befüllleitung (4) mit einem stromaufwärtigen Ende (3), das mit mindestens einer Druckgasquelle (5) verbunden ist, und einem stromabwärtigen Ende (8), das an einen zu befüllenden Tank (2) angeschlossen ist, versehen ist, wobei die Befüllleitung (4) einen Durchsatzmesser (9) und ein stromabwärtiges Absperrventil (6), das zwischen dem Durchsatzmesser (9) und dem stromabwärtigen Ende (8) der Befüllleitung angeordnet ist, umfasst, das Verfahren umfassend einen Schritt des Übertragens von Gas von der Quelle (5) zum Tank (2), während welchem das stromabwärtige Absperrventil (6) offen ist, einen Schritt des Unterbrechens der Gasübertragung mit einer Schließung des stromabwärtigen Ventils (6), wobei das Verfahren einen Schritt des Messen der Gasmenge, die im Verlauf des Schritts des Übertragens übertragen wird, durch den Durchsatzmesser (9) umfasst, wobei das Verfahren einen Schritt des Erzeugens eines Signals einer korrigierten Menge übertragenen Gases umfasst, wobei die korrigierte Menge übertragenen Gases durch Hinzufügung einer bestimmten positiven oder negativen Korrekturmenge zur Menge übertragenen Gases, die vom Durchsatzmesser (9) im Verlauf des Schritts des Übertragens gemessen wird, erhalten wird, wobei die bestimmte Korrekturmenge die Differenz zwischen einerseits der gemessenen oder berechneten Gasmenge, die sich vor dem Schritt des Übertragens stromab des Durchsatzmessers (9) in der Befüllleitung (4) befindet, und andererseits der gemessenen oder berechneten Gasmenge ist, die sich während und/oder am Ende des Schritts des Übertragens in der Befüllleitung (4) stromab des Durchsatzmessers (9) befindet, und **dadurch gekennzeichnet, dass** der Schritt des Erzeugens eines Signals einer korrigierten Menge übertragenen Gases mehrmals im Verlauf des Schritts des Übertragens durchgeführt wird, das heißt, dass die Differenz zwischen einerseits der gemessenen oder berechneten Gasmenge, die sich vor dem Schritt des Übertragens stromab des Durchsatzmessers (9) in der Befüllleitung (4) befindet, und andererseits der gemessenen oder berechneten Gasmenge, die sich während des Befüllens in der Befüllleitung (4) stromab des Durchsatzmessers (9) befindet, im Verlauf des Befüllens zu aufeinanderfolgenden Zeitpunkten mehrmals berechnet wird, und dadurch, dass das letzte erzeugte Signal der korrigierten Menge übertragenen Gases das vorhergehende Signal der korrigierten Menge übertragenen Gases ersetzt, das im Verlauf desselben Befüllens erzeugt wird.

2. Verfahren nach Anspruch 1, **dadurch gekennzeichnet, dass** die Gasmenge, die sich stromab des Durchsatzmessers (9) in der Befüllleitung (4) befindet, über eine vorbestimmte Zustandsgleichung, die auf das Gas angewandt wird, wie etwa die Gleichung der idealen oder realen Gase, und anhand des bekannten Volumens (V) der Befüllleitung (4) stromab des Durchsatzmessers (9), des gemessenen Drucks (15) in der Befüllleitung (4) stromab des Durchsatzmessers (9), der bekannten Art des Gases und insbesondere dessen molarer Masse oder dessen Dichte und der gemessenen oder geschätzten Temperatur (25) des Gases berechnet wird.

3. Verfahren nach Anspruch 2, **dadurch gekennzeichnet, dass** das Volumen (V) der Befüllleitung (4) stromab des Durchsatzmessers (9) die Summe eines ersten bekannten Volumens (VA) der Befüllleitung (4), das sich zwischen dem Durchsatzmesser (9) und dem stromabwärtigen Absperrventil (6) befindet, und eines zweiten bekannten Volumens (VB) der Befüllleitung (4) ist, das sich zwischen dem stromabwärtigen Absperrventil (6) und dem stromabwärtigen Ende der Befüllleitung (4) befindet, wobei die Gasmenge, die sich vor oder während/nach dem Schritt des Übertragens stromab des Durchsatzmessers (9) in der Befüllleitung (4) befindet, als die Summe der Gasmengen im ersten (VA) bzw. zweiten (VB) Volumen berechnet wird, wobei die Gasmengen im ersten (VA) und zweiten (VB) Volumen über eine vorbestimmte Zustandsgleichung, wie etwa die Gleichung der idealen oder realen Gase, die auf das erste (VA) bzw. zweite (VB) Volumen angewandt wird, von den gemessenen Drücke (15) in der Befüllleitung (4) jeweils in den Volumen (VA, VB), von der bekannten Art des Gases und insbesondere dessen molarer Masse oder dessen Dichte und von der gemessenen oder geschätzten Temperatur (25) des Gases jeweils in den Volumen (VA, VB), berechnet werden (V = VA + VB).

4. Verfahren nach Anspruch 3, **dadurch gekennzeichnet, dass** die gemessene oder berechnete Gasmenge, die sich vor dem Schritt des Übertragens stromab des Durchsatzmessers (9) in der Befüllleitung (4) befindet, erreicht wird, während das Absperrventil (6) geschlossen ist und das erste Volumen (VA) den Druck der Druckgasquelle (5) aufweist, das heißt, dass das erste Volumen (VA) mit der Druckgasquelle (5) in Fluidverbindung steht.

5. Verfahren nach Anspruch 3 oder 4, **dadurch gekennzeichnet, dass** die Befüllleitung (4) einen Wärmetauscher (7) zur Kühlung des Gases umfasst, der sich zwischen dem Durchsatzmesser (9) und dem stromabwärtigen Absperrventil (6) befindet, wobei das erste Volumen (VA) von einem ersten Abschnitt (VA1), der sich zwischen dem Durchsatzmesser (9) und dem Einlass des Wärmetauschers (7) befindet, und einem zweiten Abschnitt, der sich zwischen dem Wärmetauscher (7) und dem stromabwärtigen Absperrventil (6) befindet, gebildet ist, und dadurch, dass die Gasmenge im ersten Volumen (VA) als die Summe der Gasmengen in den Abschnitten (VA1, VA2) berechnet wird, deren Volumen bekannt sind und in denen die jeweiligen Drücke oder Temperaturen des Gases gesondert gemessen (15, 25, 35) oder geschätzt werden.

6. Verfahren nach einem der Ansprüche 3 bis 5, **dadurch gekennzeichnet, dass** die Gasmenge, die sich vor dem Schritt des Übertragens stromab des Durchsatzmessers (9) in der Befüllleitung (4) befindet, gemessen oder berechnet wird, während das stromabwärtige Absperrventil (6) geschlossen ist und während das zweite Volumen (VB) den Druck des zu befüllenden Tanks (2) aufweist, das heißt, dass das zweite Volumen (VB) mit dem Tank (2) in Fluidverbindung steht.

7. Verfahren nach einem der Ansprüche 1 bis 6, **dadurch gekennzeichnet, dass** die Befüllleitung (4) stromab des stromabwärtigen Absperrventils (6) ein gesteuertes Entlastungsventil (10) umfasst, das dazu ausgebildet ist, die Entlastung der Befüllleitung (4) zu gestatten, und dadurch, dass die Gasmengen, die vor und nach dem Schritt des Übertragens stromab des Durchsatzmessers (9) in der Befüllleitung (4) gemessen oder berechnet werden, bestimmt werden, während das Entlastungsventil (10) geschlossen ist und vor einem eventuellen Schritt des Entlastens, der darin besteht, das Entlastungsventil (10) nach dem Schritt des Übertragens zu öffnen.

8. Verfahren nach Anspruch 7, **dadurch gekennzeichnet, dass** der gemessene Druck (15, 35) in der Befüllleitung (4) stromab des Durchsatzmessers (9) erreicht wird, wenn das Entlastungsventil (10) geschlossen ist.

9. Verfahren nach einem der Ansprüche 1 bis 8, **dadurch gekennzeichnet, dass** der Schritt des Erzeugens eines Signals einer korrigierten Menge übertragenen Gases während des Schritts des Übertragens insbesondere regelmäßig, kontinuierlich oder zeitweise während des Schritts des Übertragens und eventuell am oder nach dem Ende des Schritts des Übertragens durchgeführt wird.

10. Verfahren nach einem der Ansprüche 1 bis 9, **dadurch gekennzeichnet, dass** der neueste Wert der Menge übertragenen Gases bei einer Anzeige und/oder einer Fakturierung und/oder einer Übertragung von Daten zur Gasmenge, die im Verlauf des Befüllens in den Tank (2) eingeleitet wird, berücksichtigt wird, das heißt, dass die Gasmenge, die in den Tank (2) eingeleitet wird, periodisch oder kontinuierlich im Verlauf des Befüllens anhand der variablen Werte aktualisiert wird, welche die Menge übertragenen Gases, die vom Durchsatzmesser im Verlauf des Befüllens gemessen wird, und die Korrekturmenge sind, die im Verlauf des Befüllens bestimmt wird.

11. Verfahren nach einem der Ansprüche 1 bis 10, **dadurch gekennzeichnet, dass** der Durchsatzmesser (9) von dem Typ ist, der elektrische Signale in Form von aufeinanderfolgenden Impulsen erzeugt, die jeweils einer gemessenen elementaren Gasmenge entsprechen, und dadurch, dass die Erzeugung eines Signals einer korrigierten Menge übertragenen Gases durch einen Schritt des Änderns mindestens eines von Folgendem erhalten wird: dem Wert der elementaren Gasmenge, die einem Impuls entspricht, der vom Durchsatzmesser (9) erzeugt wird, und/oder der Anzahl der Impulse, die vom Durchsatzmesser (9) erzeugt werden, und/oder der Emissionsfrequenz der Impulse, die vom Durchsatzmesser (9) erzeugt werden und/oder der Anzahl der erfassten Impulse unter den Impulsen, die vom Durchsatzmesser (9) erzeugt werden.

12. Verfahren nach einem der Ansprüche 1 bis 11, **dadurch gekennzeichnet, dass** die Befüllstation (1) eine elektronische Vorrichtung (12) zur Verarbeitung und Speicherung von Daten umfasst, die insbesondere einen Mikroprozessor und/oder Computer umfasst, wobei die elektronische Vorrichtung (12) dazu ausgebildet ist, ein Signal zu empfangen, das für die Menge übertragenen Gases repräsentativ ist, die vom Durchsatzmesser (9) im Verlauf des Schritts des Übertragens gemessen wird, und das Signal der korrigierten Menge übertragenen Gases zu berechnen und/oder zu empfangen und/oder zu übertragen und/oder anzuzeigen.

13. Verfahren nach einem der Ansprüche 1 bis 12, **dadurch gekennzeichnet, dass** das Signal der korrigierten Menge übertragenen Gases in einem Schritt des Berechnens einer Fakturierung der Gasmenge verwendet wird, die in den Tank (2) eingeleitet wird.

14. Station zum Befüllen von Druckfluidtanks, insbesondere zum Befüllen von Tanks mit unter Druck stehendem Wasserstoff, aufweisend eine Befüllleitung (4) mit einem stromaufwärtigen Ende (3), das mit mindestens einer Druckgasquelle (5) verbunden ist, und mindestens einem stromabwärtigen Ende (8), das dazu bestimmt ist, an einen zu befüllenden Tank (2) angeschlossen zu werden, wobei die Befüllleitung (4) einen Durchsatzmesser (9) und mindestens ein stromabwärtiges Absperrventil (6), das zwischen dem Durchsatzmesser und dem stromabwärtigen Ende (8) der Befüllleitung angeordnet ist, umfasst, wobei das mindestens eine Ventil (6) gesteuert wird, um einen Schritt des Übertragens von Gas von der Quelle (5) zum Tank (2) zu gestatten, wobei der Durchsatzmesser (9) dazu ausgebildet ist, die Menge übertragenen Gases zu messen und ein entsprechendes Signal zu erzeugen, wobei die Station (1) eine elektronische Vorrichtung (12) zur Verarbeitung und Speicherung von Daten umfasst, die insbesondere einen Mikroprozessor und/oder Computer umfasst, wobei die elektronische Vorrichtung (12) dazu ausgebildet ist, das Signal vom Durchsatzmesser (9) zu empfangen und ein Signal einer korrigierten Menge übertragenen Gases zu erzeugen, wobei die korrigierte Menge übertragenen Gases durch Hinzufügung einer bestimmten positiven oder negativen Korrekturmenge zur Menge übertragenen Gases, die vom Durchsatzmesser (9) im Verlauf des Schritts des Übertragens gemessen wird, erhalten wird, wobei die bestimmte Korrekturmenge die Differenz zwischen einerseits der gemessenen oder berechneten Gasmenge, die sich vor dem Schritt des Übertragens stromab des Durchsatzmessers (9) in der Befüllleitung (4) befindet, und andererseits der gemessenen oder berechneten Gasmenge ist, die sich während und/oder am Ende des Schritts des Übertragens in der Befüllleitung (4) stromab des Durchsatzmessers (9) befindet, und **dadurch gekennzeichnet, dass** der Schritt des Erzeugens eines Signals einer korrigierten Menge übertragenen Gases mehrmals im Verlauf des Schritts des Übertragens durchgeführt wird, das heißt, dass die Differenz zwischen einerseits der gemessenen oder berechneten Gasmenge, die sich vor dem Schritt des Übertragens stromab des Durchsatzmessers (9) in der Befüllleitung (4) befindet, und andererseits der gemessenen oder berechneten Gasmenge, die sich während des Befüllens in der Befüllleitung (4) stromab des Durchsatzmessers (9) befindet, im Verlauf des Befüllens zu aufeinanderfolgenden Zeitpunkten mehrmals berechnet wird, und dadurch, dass das letzte erzeugte Signal der korrigierten Menge übertragenen Gases das vorhergehende Signal der korrigierten Menge übertragenen Gases ersetzt, das im Verlauf desselben Befüllens erzeugt wird.

## Claims

1. Method for measuring the quantity of gas introduced into a gas tank (2) via a filling station (1) provided with a filling pipe (4) comprising an upstream end (3) connected to at least one source (5) of pressurized gas and a downstream end (8) connected to a tank (2) that is to be filled, the filling pipe (4) comprising a flow meter (9) and a downstream isolation valve (6) positioned between the flow meter (9) and the downstream end (8) of the filling pipe, the method comprising a step of transferring gas from the source (5) to the tank (2), during which step the downstream isolation valve (6) is open, a step of interrupting the transfer of gas with closure of the downstream valve (6), the method comprising a step of measuring, using the flow meter (9), the quantity of gas transferred during the transfer step, the method comprising a step of generating a signal indicating the corrected quantity of gas transferred, the corrected quantity of gas transferred being obtained by adding a positive or negative determined corrective quantity to the measured quantity of gas transferred, as measured by the flow meter (9) during the transfer step, the determined corrective quantity being the difference between, on the one hand, the measured or calculated quantity of gas situated downstream of the flow meter (9) in the filling pipe (4) prior to the transfer step and, on the other hand, the measured or calculated quantity of gas situated in the filling pipe (4) downstream of the flow meter (9) during and/or at the end of the transfer step, and **characterized in that** the step of generating a signal indicating the corrected quantity of gas transferred is performed several times during the course of the transfer step, which means to say that the difference between, on the one hand, the measured or calculated quantity of gas situated downstream of the flow meter (9) in the filling pipe (4) before the transfer step and, on the other hand, the measured or calculated quantity of gas situated in the filling pipe (4) downstream of the flow meter (9) during filling, is calculated several times during the course of the filling at successive moments in time, and **in that** the last-generated signal indicating the corrected quantity of gas transferred replaces the previous signal indicating the corrected quantity of gas transferred generated during the course of the same filling operation.

2. Method according to Claim 1, **characterized in that** the quantity of gas situated downstream of the flow meter (9) in the filling pipe (4) is calculated via a predetermined state equation applied to the gas, such as the perfect-gas or real-gas equation, and from the known volume (V) of the filling pipe (4) downstream of the flow meter (9), from the pressure measured (15) in the filling pipe (4) downstream of the flow meter (9), from the known nature of said gas and notably its molar mass or its density, and from the measured or estimated temperature (25) of the gas.

3. Method according to Claim 2, **characterized in that** the volume (V) of the filling pipe (4) downstream of the flow meter (9) is the sum of a first known volume (VA) of the filling pipe (4) situated between the flow meter (9) and the downstream isolation valve (6) and of a second known volume (VB) of the filling pipe (4) situated between the downstream isolation valve (6) and the downstream end of the filling pipe (4), the quantity of gas situated downstream of the flow meter (9) in the filling pipe (4) before or during/after the transfer step being calculated as the sum of the quantities of gas in, respectively, the first (VA) and second (VB) volumes, the quantities of gas in the first (VA) and second (VB) volumes being calculated (V=VA+VB) via a predetermined state equation such as the perfect-gas or real-gas equation, applied to the first (VA) and to the second (VB) volumes respectively, from the pressures measured (15) in the filling pipe (4) and in said volumes (VA, VB) respectively, from the known nature of said gas and notably its molar mass or its density, and from the measured (25) or estimated temperature of the gas in said volumes (VA, VB) respectively.

4. Method according to Claim 3, **characterized in that** the measured or calculated quantity of gas situated downstream of the flow meter (9) in the filling pipe (4) before the transfer step is determined while the downstream isolation valve (6) is closed and while the first volume (VA) is at the pressure of the pressurizedgas source (5), namely while the first volume (VA) is in fluidic communication with the source (5) of pressurized gas.

5. Method according to Claim 3 or 4, **characterized in that** the filling pipe (4) comprises a heat exchanger (7) for cooling the gas situated between the flow meter (9) and the downstream isolation valve (6), the first volume (VA) consisting of a first portion (VA1) situated between the flow meter (9) and the inlet of the heat exchanger (7) and a second portion situated between the heat exchanger (7) and the downstream isolation valve (6), and **in that** the quantity of gas in the first volume (VA) is calculated as being the sum of the quantities of gas in said portions (VA1, VA2) the volumes of which are known and in which the respective pressures or temperatures of the gas are measured (15, 25, 35) or estimated separately.

6. Method according to any one of Claims 3 to 5, **characterized in that** the quantity of gas situated downstream of the flow meter (9) in the filling pipe (4) before the transfer step is measured or calculated while the downstream isolation valve (6) is closed and while the second volume (VB) is at the pressure of the tank (2) that is to be filled, namely while the second volume (VB) is in fluidic communication with the tank (2).

7. Method according to any one of Claims 1 to 6, **characterized in that** the filling pipe (4) comprises, downstream of the downstream isolation valve (6), a controlled purge valve (10) configured to allow the purging of the filling pipe (4), and **in that** the measured or calculated quantities of gas downstream of the flow meter (9) in the filling pipe (4) before and after the transfer step are determined while the purge valve (10) is closed and prior to a purge step, if any, that consists in opening the purge valve (10) after the transfer step.

8. Method according to Claim 7, **characterized in that** the pressure measured (15, 35) in the filling pipe (4) downstream of the flow meter (9) is measured when the purge valve (10) is closed.

9. Method according to any one of Claims 1 to 8, **characterized in that** the step of generating a signal indicating the corrected quantity of gas transferred is performed during the transfer step, notably regularly, continuously or intermittently during the transfer step and possibly at the end or after the end of the transfer step.

10. Method according to any one of Claims 1 to 9, **characterized in that** the most recent value for the quantity of gas transferred is taken into consideration when displaying and/or making a charge for and/or transmitting data pertaining to the quantity of gas introduced into the tank (2) during the filling, which means to say that the quantity of gas introduced into the tank (2) is periodically or continuously updated during the course of filling from variable values which are the measured quantity of gas transferred, as measured by the flow meter during the course of filling, and the corrective quantity determined during the course of filling.

11. Method according to any one of Claims 1 to 10, **characterized in that** the flow meter (9) is of the type that generates electric signals in the form of successive pulses each corresponding to an elementary measured quantity of gas, and **in that** the generation of a signal indicating the corrected quantity of gas transferred is obtained by a step of modifying at least one of the following: the value of the elementary quantity of gas corresponding to a pulse generated by the flow meter (9) and/or the number of pulses generated by the flow meter (9) and/or the frequency with which the pulses generated by the flow meter (9) are emitted and/or the number of pulses counted from the pulses generated by the flow meter (9).

12. Method according to any one of Claims 1 to 11, **characterized in that** the filling station (1) comprises an electronic data processing and storage device (12), notably comprising a microprocessor and/or a computer, said electronic device (12) being configured to receive a signal indicative of the quantity of gas transferred as measured by the flow meter (9) during the transfer step and to calculate and/or receive and/or transmit and/or display the signal indicating the corrected quantity of gas transferred.

13. Method according to any one of Claims 1 to 12, **characterized in that** the signal indicating the corrected quantity of gas transferred is used in a step of calculating a charge to be made for the quantity of gas introduced into the tank (2).

14. Filling station for filling tanks with pressurized fluid, notably for filling pressurized hydrogen tanks, comprising a filling pipe (4) comprising an upstream end (3) connected to at least one source (5) of pressurized gas and at least one downstream end (8) intended to be connected to a tank (2) that is to be filled, the filling pipe (4) comprising a flow meter (9) and at least one downstream isolation valve (6) positioned between the flow meter and the downstream end (8) of the filling pipe, the at least one valve (6) being operated in such a way as to allow a step of transferring gas from the source (5) to the tank (2), the flow meter (9) being configured to measure the quantity of gas transferred and to generate a corresponding signal, the station (1) comprising an electronic data processing and storage device (12), notably comprising a microprocessor and/or a computer, the electronic device (12) being configured to receive the signal from the flow meter (9) and to generate a signal indicating the corrected quantity of gas transferred, the corrected quantity of gas transferred being obtained by adding a positive or negative determined corrective quantity to the measured quantity of gas transferred, as measured by the flow meter (9) during the transfer step, the determined corrective quantity being the difference between, on the one hand, the measured or calculated quantity of gas situated downstream of the flow meter (9) in the filling pipe (4) prior to the transfer step and, on the other hand, the measured or calculated quantity of gas situated in the filling pipe (4) downstream of the flow meter (9) during and/or at the end of the transfer step, and **characterized in that** the step of generating a signal indicating the corrected quantity of gas transferred is performed several times during the course of the transfer step, which means to say that the difference between, on the one hand, the measured or calculated quantity of gas situated downstream of the flow meter (9) in the filling pipe (4) before the transfer step and, on the other hand, the measured or calculated quantity of gas situated in the filling pipe (4) downstream of the flow meter (9) during filling, is calculated several times during the course of the filling at successive moments in time, and **in that** the last-generated signal indicating the corrected quantity of gas transferred replaces the previous signal indicating the corrected quantity of gas transferred generated during the course of the same filling operation.
